# EUROPÄISCHE PATENTSCHRIFT

(11) **EP 1 296 868 B1**
(45) Veröffentlichungstag und Bekanntmachung des Hinweises auf die Patenterteilung: **29.09.2010**
(21) Anmeldenummer: 01921012.9
(22) Anmeldetag: 11.04.2001
(51) Int. Cl.: B62D 1/184

(54) **FIXIERVORRICHTUNG FÜR EINE HÖHEN- UND/ODER LÄNGENVERSTELLBARE LENKWELLE**
FIXING DEVICE FOR A STEERING SHAFT, WHOSE HEIGHT AND/OR LENGTH CAN BE ADJUSTED
SYSTEME DE FIXATION POUR UN ARBRE DE DIRECTION REGLABLE EN HAUTEUR ET/OU EN LONGUEUR

(30) Priorität: 20.04.2000 AT 7132000
(43) Veröffentlichungstag der Anmeldung: 02.04.2003
(73) Patentinhaber: ThyssenKrupp Presta Aktiengesellschaft, 9492 Eschen (LI)
(72) Erfinder: HEIML, Roland, A-4870 Vöcklamarkt (AT)
(74) Vertreter: Adams, Steffen
(86) Internationale Anmeldenummer: PCT/AT2001/000104
(87) Internationale Veröffentlichungsnummer: WO 2001/081149

(56) Entgegenhaltungen:
- EP-A- 0 529 769
- DE-A- 19 643 203
- FR-A- 2 687 628
- GB-A- 2 087 808
- GB-A- 2 295 219
- US-A- 5 737 971

## Beschreibung

Die Erfindung betrifft eine Fixiervorrichtung, wie sie im Oberbegriff des Anspruches 1 beschrieben ist.

Aus der DE 196 43 203 A1, die dem Oberbegriff des Anspruchs 1 entspricht, ist eine Lenkwellenverstelleinheit mit einer Verstell- und einer dieser zugeordneten Fixiereinrichtung bekannt, wobei eine Lenkwelle in Richtung der Längsachse der Lenkwelle verschiebbar und gegenüber einer in einem Fahrzeug ortsfest angeordneten Halterung quer zur Längserstreckung der Lenkwelle verschwenkbar ist. Einem quer zur Längsachse der Lenkwelle verlaufenden Spannbolzen sind zwei über einen Betätigungshebel relativ zueinander verstellbare Fixiervorrichtungen zugeordnet, die jeweils ein Bodenelement mit einem Klemmelement, ein Führungselement und zumindest ein Rückstellelement umfassen, dessen Klemmelemente in der Sperrstellung formschlüssig mit einem gezahnten Klemmelement des Tragelementes und der Halterung in Eingriff stehen und die eingestellte Position der Lenkwelle fixieren. Eine derartige, mit hohem Fertigungsaufwand herzustellende Lenkwellenverstelleinheit weist eine Vielzahl von unterschiedlichen, konstruktiv aufwendigen Bauelementen auf, die nur durch hohen kostenintensiven maschinellen Aufwand herstellbar sind.

Aus der GB 2 295 219 A ist eine Lenkwellenverstelleinheit mit einer Verstell- und einer dieser zugeordneten Fixiereinrichtung bekannt, wobei eine Lenkwelle in Richtung ihrer Längsachse verschiebbar und gegenüber einer im Fahrzeug angeordneten Halterung radial verschwenkbar ist. Die Halterung ist U-förmig ausgebildet und weist zwei Seitenschenkel auf, zwischen denen ein im Querschnitt kreiszylindrisches Tragelement angeordnet ist. Am Tragelement sind beidseitig Profilschenkel in einem Abstand zu den Seitenschenkeln und parallel zu diesen angeformt. In den Profilschenkeln des Tragelementes sind in Richtung der Längsachse der Lenkwelle Ausnehmungen und in den Seitenschenkeln der Halterung quer zur Längsachse der Lenkwelle Durchbrüche vorgesehen. Die Fixiereinrichtung weist ein quer zur Längsachse der Lenkwelle verlaufendes Spannelement auf, auf dem in Längsrichtung mittels eines Hebels verstellbare Fixiervorrichtungen vorhanden sind, die jeweils ein Klemmelement zwischen den Seitenschenkeln der Halterung und den Profilschenkeln des Tragelementes und dem Hebel und einem Seitenschenkel aufweist. In einer gespannten Sperrstellung sind die planaren Klemmflächen der scheibenartigen Klemmelemente und die jeweiligen planaren Flächenabschnitte an den Seitenschenkeln und Profilschenkeln kraftschlüssig aneinander gepreßt. Ferner sind aus diesen Dokument Führungselemente für die Fixiereinrichtung bekannt, die in die Durchbrüche der Halterung und in die Längsschlitze des Tragelementes eingesetzt sind und einen Rahmenteil ausbilden, der zwei parallel zueinander verlaufende Längsseitenränder und zwei quer zu diesen verlaufende Querseitenränder aufweist. Eine von den Längs- und Breitseitenrändern umgrenzte schlitzartige Öffnung im Führungselement, ist vom Spannelement durchragt. An den einander zugewandten, die Öffnung begrenzenden Querseitenflächen ist je ein Dämpfungsorgan aus Kunststoff zur Absorption der während dem kräftigen Anschlagen des Spannelementes an eine der Endlagen hervorgerufenen kinetischen Energie vorgesehen.

Eine Fixiereinrichtung für eine verstellbare Lenksäulenanordnung eines Fahrzeuges ist aus der EP 0 529 769 A1 bekannt, die erste und zweite miteinander formschlüssig in Eingriff bringbare Klemmelemente aufweist, von denen wenigstens eines der Klemmelemente eine Einrichtung zu seiner Verriegelung gegen einen Abschnitt der Längssäulenanordnung hat. Nachgiebige Mittel können die Klemmelemente auseinanderdrücken und ein Klemmelement außer Sperreingriff mit dem Abschnitt bringen.

Weiters ist aus der FR 2 687 628 A eine Lenkwellenverstelleinheit für die Verstellung und Fixierung einer Lenkwelle mit einer elektrisch wirkenden Verstelleinrichtung und einer dieser zugeordneten elektrisch wirkenden Fixiereinrichtung bekannt, bei der eine im Querschnitt U-förmige Halterung und ein die Lenkwelle lagerndes Tragelement relativ zueinander verstellbar ausgebildet sind und zur Fixierung einer eingestellten Relativlage zwischen der Halterung und dem Tragelement eine Antriebsanordnung vorgesehen ist, wobei in einer Sperrstellung über ein Klemmelement ein flächiger Reibschluß zwischen diesem und der Halterung hergestellt ist.

Eine Lenkwellenverstelleinheit bestehend aus einer an der Karosserie des Fahrzeuges und im Querschnitt etwa U-förmig ausgebildeten Halterung und einem zwischen dieser angeordneten Tragelement zur Lagerung der Lenkwelle, ist aus der GB 2 087 808 A bekannt. Die Fixiereinrichtung umfaßt ein quer zur Längsachse der Lenkwelle verlaufendes Spannelement, auf dem eine in Längsrichtung mittels eines Hebels verstellbare Fixiervorrichtung vorhanden ist, die ein Klemmelement zwischen dem Hebel und der Halterung aufweist. Zwischen den Seitenschenkeln der Halterung sind ein das Tragelement abstützendes Profil und eine vom Spannelement aufgenommene Distanzhülse angeordnet. In einer Sperrstellung wird über das zwischen dem Hebel und der Halterung vorhandene Klemmelement sowie den Schenkeln des Profiles und der Halterung ein flächiger Reibschluß bewirkt.

Darüber hinaus ist aus der US 5,737,971 A eine Lenkwellenverstelleinheit bekannt, bei der eine Länge und/oder Neigung einer Lenkwelle über eine mit einer Antriebsanordnung gekoppelten Zahnradgetriebeanordnung elektrisch verstellbar ist.

Aus der EP 0 496 387 A2 ist eine Lenkwellenverstelleinheit mit einer Verstell- und einer dieser zugeordneten Fixiereinrichtung bekannt, wobei das zumindest teilweise den Umfang des Tragelementes umgebende und quer zu seiner Längserstreckung angebrachte einteilige, geschlitzte Klemmelement von einer für die Höhenverstellung an der Karosserie angebundenen Fixiereinrichtung aufgenommen wird. Das über ein Spannelement aufgenommene Klemmelement ist mit dem Tragelement verbunden, welches über den mit dem Spannelement bewegungsfest verbundenen Hebel betätigt wird.

Eine Lenkwellenverstelleinheit für die Verstellung und Fixierung einer Lenkwelle in einem Kraftfahrzeug mit einer Verstelleinrichtung und einer dieser zugeordneten Fixiereinrichtung ist bereits von der Volkswagen AG bekannt, wobei sich die Lenkwellenverstelleinheit zumindest über einen Teil eines die Lenkwelle umgebenden Tragelementes erstreckt, welches um eine zur Lenkwelle senkrechte Achse schwenkbar an der Karosserie gelagert ist.

Die Fixiereinrichtung weist beidseits zum Tragelement angeordnete Klemmelemente auf, die durch Reiblamellenpakete gebildet sind, welche in einer Sperrstellung einen Reibschluß erzeugen und somit die Fixierung ermöglichen. Nachteilig dabei, sind die für eine Fixierung erforderlichen hohen Reibkräfte zwischen den einzelnen Lamellen, wodurch eine entsprechende robuste Auslegung der Verstell- und Fixiereinrichtung erforderlich wird.

Der vorliegenden Erfindung liegt die Aufgabe zugrunde, eine Fixiervorrichtung einer Verstell- und Fixiereinrichtung einer Lenkwellenverstelleinheit zu schaffen, die aus wenigen Einzelkomponenten besteht.

Die Aufgabe der Erfindung wird durch die Merkmale des Anspruches 1 gelöst. Von Vorteil ist, daß während eines Verstellvorganges in Richtung der Länge und/oder Neigung durch ein gegebenenfalls kräftiges Anschlagen des Führungselementes in einer der Endlagen hohe Kräfte bzw. Energien "frei" werden, die vom Rückstellelement durch elastische Verformung in eine oder mehrere Raumrichtungen absorbiert werden. Das Rückstellelement ermöglicht einerseits eine Rückfunktion des Bodenelementes in dessen entspannte Öffnungsstellung und andererseits eine Dämpfungsfunktion durch das Absorbieren der Energie beim beschriebenen Anschlagen. Beide Funktionen werden von einem einzigen Bauteil ermöglicht. Dadurch kann die Anzahl der Einzelbauteile minimiert und die Kosten für die Herstellung einer Lenkwellenverstelleinheit erheblich reduziert werden. Es sind keine zusätzlichen Dämpfungsorgane im Bereich der Ausnehmung des Tragelementes nötig, sodaß der konstruktive Aufbau vereinfacht wird.

Vorteilhaft ist nach der Ausbildung nach Anspruch 2, daß das Rückstellelement als Dämpfungselement in mehrere Raumrichtungen verwendet werden kann.

Vorteilhaft ist eine Ausbildung nach Anspruch 3, da das Führungselement als Anschlagelement für das Begrenzen des Verstellweges dient, wobei die beim Anschlagen erzeugte Energie unmittelbar auf das Rückstellelement und Bodenelement übertragen wird.

Durch die Ausbildung nach Anspruch 4 ist es möglich, daß das Führungselement und Bodenelement übereinander liegen, wodurch der erforderliche Platzbedarf für die Unterbringung des Führungs-, Rückstell- und Bodenelementes verringert wird.

Die Ausgestaltungen nach den Ansprüchen 5 bis 7 sind von Vorteil, da das Rückstellelement von der Nut und dem Aufsatz gehalten ist, sodaß auch bei hohen, seitlich einwirkenden Kräften das Rückstellelement positioniert bleibt.

Vorteilhaft ist weiters eine Ausbildung nach Anspruch 8, da während des Anschlagens des Führungselementes an eine der Endlagen der Ausnehmung das Rückstellelement deformiert wird und sich dieses zumindest teilweise am konkaven Kurvenstück des Aufsatzes und dem diesen zugeordneten konvexen Kurvenstück des Führungselementes anschmiegt, wobei die einwirkende Energie als Schubspannung im Rückstellelement aufgenommen wird. Dadurch können vom Rückstellelement ohne wesentlichen Verschleiß Kräfte aufgenommen werden. Von weiterem Vorteil ist, daß das Führungselement auch in einer entspannten Öffnungsstellung vom Rückstellelement positioniert gehaltert und im wesentlichen spielfrei geführt ist.

Die Ausbildungen nach den Ansprüchen 9 und 10 erlauben die Verwendung standardisierter kostengünstiger Bauelemente.

Die Erfindung wird durch die im nachfolgenden anhand der in den Zeichnungen dargestellten verschiedenen Ausführungsbeispiele näher erläutert.

Es zeigen:
- Fig. 1: eine Lenkwellenverstelleinheit in Seitenansicht und stark vereinfachter, schemati- scher Darstellung;
- Fig. 2: eine erfindungsgemäße Verstell- und Fixiereinrichtung in Stirnansicht, geschnit- ten gemäß den Linien II-II in Fig. 1;
- Fig. 3: ein Tragelement in Stirnansicht, geschnitten und in schematischer Darstellung;
- Fig. 4: einen Teilbereich des Tragelementes und der Fixiereinrichtung mit einer erfin- dungsgemäßen Fixiervorrichtung, geschnitten und in stark vereinfachter Darstel- lung;
- Fig. 5: ein Bodenelement der Fixiervorrichtung nach Fig. 4, in Draufsicht und stark ver- einfachter Darstellung;
- Fig. 6: einen Teilbereich des Tragelementes und die Fixiervorrichtung nach Fig. 4, in Seitenansicht, geschnitten und schematischer Darstellung;
- Fig. 7: ein Führungselement der Fixiervorrichtung nach Fig. 4, in Draufsicht und verein- fachter Darstellung;
- Fig. 8: einen Teilbereich des Tragelementes und der Fixiereinrichtung mit einer anderen Ausführung der erfindungsgemäßen Fixiervorrichtung, in Stirnansicht, geschnit- ten und in stark vereinfachter Darstellung;
- Fig. 9: ein Bodenelement der Fixiervorrichtung nach Fig. 8, in Draufsicht und stark ver- einfachter Darstellung;
- Fig. 10: einen Teilbereich des Tragelementes und die Fixiervorrichtung nach Fig. 8, in Seitenansicht, geschnitten und schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Es wird darauf hingewiesen, daß alle Fig. in einer entspannten Öffnungsstellung dargestellt sind.

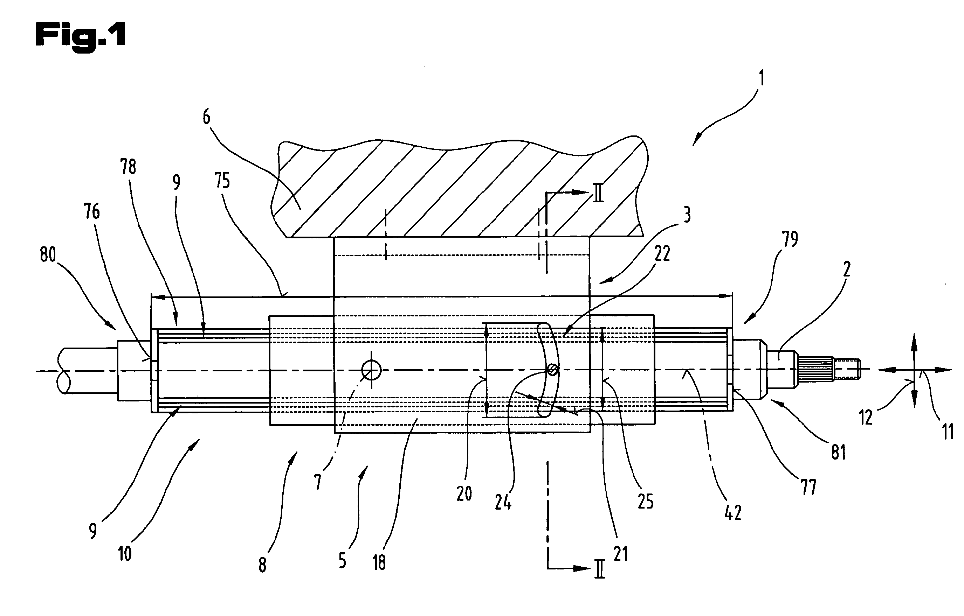

In den Fig. 1 bis 3 ist eine Lenkwellenverstelleinheit 1 für die Verstellung und Fixierung einer Lenkwelle 2 gezeigt, welche mit einer Verstelleinrichtung 3 und einer dieser zugeordneten Fixiereinrichtung 4 ausgestattet ist. Die Lenkwellenverstelleinheit 1 ist mehrteilig, in vorteilhafter Weise modulartig aufgebaut und besteht aus einer die Arretiervorrichtung bildenden, bevorzugt U-förmigen Halterung 5, die mit einer Karosserie 6 fix verbunden ist, und einem innerhalb der U-förmigen Halterung 5 an einer Schwenkachse 7 schwenkbeweglich gelagerten, in etwa U-förmigen oder trapezförmigen etc. Profilstück 8 und führt ein über ein Führungselement 9, wie beispielsweise Führungsleisten, Führungskalotten, Führungskulisse, Kulissensteine etc. innenliegendes Tragelement 10, das beispielsweise als Mantelrohr ausgebildet ist, in dem eine aus dem Stand der Technik bekannte längenveränderbare Lenkwelle 2 positioniert gehalten ist. Vorteilhaft dabei ist, daß die Halterung 5, das Profilstück 8 und das Tragelement 10 zumindest bereichsweise gehäuseartig umhüllt sind, wodurch die Lenkwellenverstelleinheit 1 weitestgehend, ohne zusätzliche konstruktive Maßnahmen vorzunehmen, gegen äußere Störeinflüsse geschützt ist. Das vom Profilstück 8 und der U-förmigen Halterung 5 umgebene Tragelement 10 ist gemäß einem Doppelpfeil 11 und/oder einem Doppelpfeil 12 mittels der Verstellvorrichtung 3 in Richtungen der Längserstreckung des Tragelementes 10 und quer zur Längserstreckung verstellbar und/oder verschwenkbar und in deren verstellten Position fixierbar, wodurch sich eine für den Fahrer individuelle Bedienungsposition des Lenkrades, wie in diesem Ausführungsbeispiel gezeigt, manuell einstellen läßt. Die Fixiereinrichtung 4 wird durch zumindest eine, bevorzugt zwei Fixiervorrichtungen 13 und 14 gebildet, die auf eine Oberfläche 15 der U-förmigen Halterung 5 und/oder an einer dieser gegenüberliegenden Oberfläche 16 des Tragelementes 10 angreifen und eine eingestellte Position zwischen zwei Verstellvorgängen fixieren.

Zwei zu einer in Längserstreckung senkrecht ausgerichteten Mittellinie 17 der Lenkwelle 2 parallel verlaufende Schenkel 18 mit einer Höhe 19 nehmen das zwischenliegende, an der Schwenkachse 7 schwenkbar gelagerte Profilstück 8 und das für die Längsverstellung vom Profilstück 8 geführte Tragelement 10 auf. Einer der beiden Schenkel 18 besitzt einen mit einer Länge 20 und einer Breite 21 quer zur Längsrichtung der Lenkwelle 2, insbesondere der Schwenkachse 7 zugewandt konvex verlaufenden Durchbruch 22, der eine Verstellung gemäß dem Doppelpfeil 12 zuläßt. Die Breite 21 des beispielsweise schlitzförmigen Durchbruches 22 ist geringfügig größer bemessen, als ein mit einem Durchmesser 23 ausgebildetes, quer zur Längsrichtung der Lenkwelle 2 ausgerichtetes Spannelement 24, das zur Aufnahme der Fixiereinrichtung 4 dient. Bevorzugt wird das verdrehgesicherte Spannelement 24 durch einen Spannbolzen etc. gebildet. Dabei werden die Fixiervorrichtung 13 und 14 gegenüber dem Spannelement 24 verdrehgesichert gehalten. Der zur Schwenkachse 7 beabstandete Durchbruch 22 begrenzt einen durch die Differenz der Länge 20 und des Durchmessers 23 resultierenden Verstellweg 25, der je nach Verwendungszweck unterschiedlich ausgeführt werden kann. Eine Mittellinie 26 des Spannelements 24 verläuft deckungsgleich mit einer vom Profilstück 8 und dem Tragelement 10 ausgebildeten Symmetrieachse 27.

Das von der U-förmigen Halterung 5 innerhalb der Höhe 19 aufgenommene, bevorzugt um 90° zu dieser verdreht angeordnete und in etwa U-förmige Profilstück 8 ist in einem Abstand 28 zu den beiden gegenüberliegenden Schenkel 18 der Halterung 5 positioniert gehaltert. Zwei von dem Profilstück 8 mit einer Höhe 29 ausgebildete Seitenschenkel 30, sind an einer Außenseite 31 parallel zu der Symmetrieachse 27 verlaufend angeordnet und bilden mit einer die Seitenschenkel 30 schließenden Basis 32 einen U-förmigen Verlauf. Die Höhe 29 ragt von der Basis 32 in Richtung der Symmetrieachse 27 vor. Das Profilstück 8 weist an seiner Innenseite 33 in einem Winkel 34 zu den Seitenschenkeln 30 verlaufende Zwischenteile 36 und eine Führungsvorrichtung 37 auf, die durch Stütz- und/oder Führungsflächen 38 umfassende Führungsbahnen, insbesondere Seiten- und/oder Höhenführungsbahnen für die Verschiebung und Abstützung des Tragelementes 10 gebildet ist. An die Zwischenteile 36 schließen Endteile 35 an, die parallel zur Symmetrieachse 27 verlaufen.

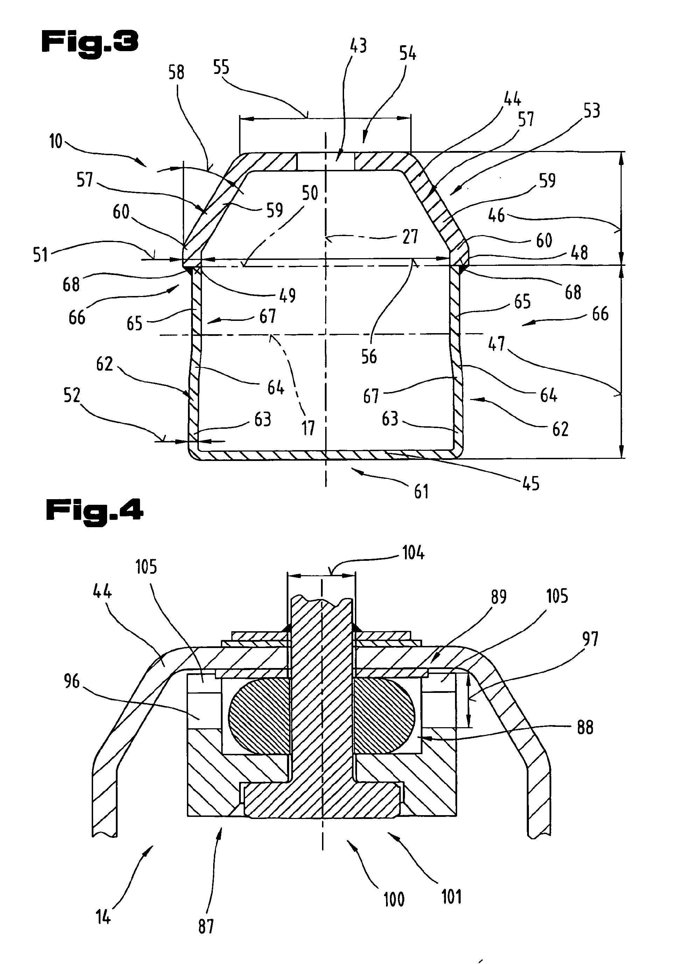

Ein in einer Querschnittsebene zwischen den Stütz- und/oder Führungsflächen 38 gebildeter Winkel ist größer als 90°. Die Summe der beiden Abstände 28 zu den beiden gegenüberliegenden Schenkeln 18 ergibt zusammen mit der Höhe 29 eine für die Halterung 5 gültige Öffnungsweite 39. Das vom Spannelement 24 aufgenommene Profilstück 8 weist an der Basis 32 in Richtung der Symmetrieachse 27 eine Bohrung 40 mit einem Durchmesser 41 auf. Das innerhalb des Profilstückes 8 in Richtung einer Lenkwellenmittellinie 42 geführte und in Richtung der Mittellinie 17 und Symmetrieachse 27 positionierte Tragelement 10 ist beispielsweise zweiteilig ausgebildet und besteht aus einem mit einer Ausnehmung 43 ausgestatteten ersten Teil 44 und einem diesem gegenüberliegenden weiteren Teil 45, wie in Fig. 3 gezeigt.

Die Ausnehmung 43 ist in Richtung der Lenkwellenmittellinie 42 parallel verlaufend angeordnet. Der erste Teil 44 mit einer Höhe 46 und der weitere Teil 45 mit einer Höhe 47 sind jeweils mit Stirnflächen 48, 49 versehen, die eine parallel zur Mittellinie 17 verlaufende imaginäre Teilungsebene 50 ausbilden.

Der erste Teil 44 mit der Höhe 46 wird zweckmäßigerweise mit einer größeren Wandstärke 51 und einer geringeren Höhe 46 als eine vom weiteren Teil 45 ausgebildete Wandstärke 52 und Höhe 47 ausgeführt. Der erste Teil 44 weist einen beispielsweise trapezförmigen Querschnitt 53 auf, wobei ein an einer Basis 54 ausgebildetes Breitenmaß 55 kleiner ist als ein parallel zum Breitenmaß 55 im Bereich der Teilungsebene 50 angeordnetes Breitenmaß 56. Die zwischen der Basis 54 des ersten Teiles 44 und der imaginären Teilungsebene 50 ausgebildeten Teile von Seitenschenkeln 57 sind in Richtung der Höhe 46 geneigt zueinander angeordnet und erweitern sich mit zunehmendem Abstand von der Basis 54 gemäß einem Winkel 58 und bilden Zwischenteile 59 und parallel zur Symmetrieachse 27 verlaufende Endteile 60, zwischen denen sich das Breitenmaß 56 erstreckt, aus. Die zwischen einer Basis 61 des weiteren Teiles 45 und der imaginären Teilungsebenen 50 ausgebildeten Teile von Seitenschenkeln 62 bilden in Richtung der Höhe 47 parallel zur Symmetrieachse 27 verlaufende Anfangsteile 63 aus, an Zwischenteile 64 mit einer leichten Verjüngung und parallel zur Symmetrieachse 27 nachgeordnete Endteile 65 anschließen. Die vom ersten Teil 44 und dem weiteren Teil 45 ausgebildeten Wandstärken 51 und 52 ergeben im Bereich der imaginären Teilungsebene 50 einen Überstand an der Außenseite 66 und/oder an der Innenseite 67.

Die Wandstärke 52 kann kleiner und/oder gleich und/oder größer als die Wandstärke 51 des ersten Teiles 44 ausgeführt sein. Dementsprechend gilt natürlich auch die Variierung der Wandstärke 51. Wie der Fig. 3 entnommen werden kann, ergibt sich bei unterschiedlichen Wandstärken 51, 52 eine Hohlkehle 68 bzw. eine Fügestelle, die eine Erleichterung der Montagearbeiten erlaubt.

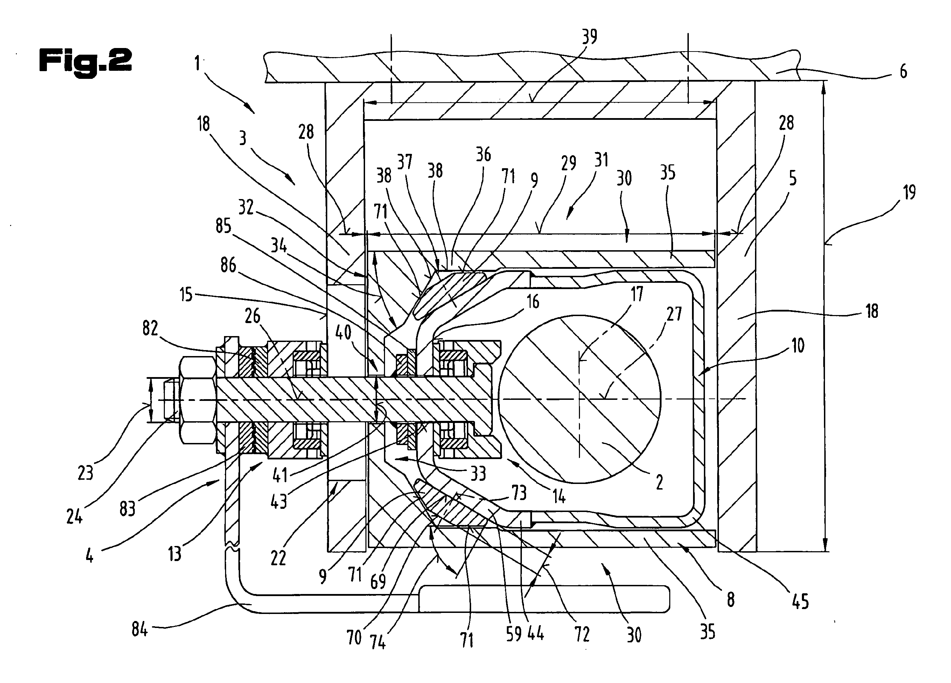

Die von dem ersten Teil 44 ausgebildeten, voneinander abgewandten Zwischenteile 64 nehmen die für die Führung des Profilstückes 8 erforderlichen Führungselemente 9 (Fig. 2) auf, die in etwa trapezförmig ausgeführt sind und zwei mit Abstand parallel verlaufende Stirnflächen 69, 70 besitzen, wobei jedes Führungselemente 9 mit der größer ausgebildeten Stirnfläche 69 mit dem Zwischenteil 59 verbunden ist. Die Verbindung der Führungselemente 9 mit dem Tragelement 10 kann beispielsweise durch Schrauben, Kleben, Nieten, Schweißen sowie mit allen anderen bekannten Füge- und Befestigungsverfahren durchgeführt werden. Zwischen den Stirnflächen 69, 70 ausgebildete Stütz- und Führungsflächen 71 sind in Richtung einer Höhe 72 vorerst parallel zu einer Symmetrieachse 73 und anschließend gemäß einem Winkel 74 geneigt zueinander verlaufend ausgebildet. Die Stütz- und Führungsflächen 71 bilden die Auflage für das zwischen der Halterung 5 und dem innenliegenden Tragelement 10 angeordnete Profilstück 8 aus.

Die winkelige Ausführung der Stütz- und Führungsflächen 71 gibt eine genaue Führungsrichtung und somit Positionierung vor und gibt zusätzlich einen für die Längsverschiebung erforderlichen und gering bemessenen Spielraum zwischen dem Profilstück 8 und dem Tragelement 10 vor. Als Führungselement 9 können alle bekannten Führungselemente, beispielsweise Hartmetalleisten etc., herangezogen werden.

Wie der Fig. 1 zu entnehmen, überragt das mit einer Länge 75 ausgeführte Tragelement 10 das Profilstück 8 und die Halterung 5 und weist an zwei gegenüberliegenden endseitigen Stirnflächen 76 und 77 Lageraufnahmestellen 78 und 79 auf, die die Lagerungen 80 und 81 für die Lenkwelle 2 ausbilden. Natürlich ist jede beliebige Ausgestaltung einer Länge der Halterung 5, des Profilstückes 8 und des Tragelementes 10 möglich. Beispielsweise kann die Länge der Halterung 5 und/oder des Tragelementes 10 kleiner und/oder gleich und/oder größer bemessen sein als die Länge des Profilstückes 8. Eine andere, nicht gezeigte Ausbildung besteht darin, daß die Lagerungen 80 und 81 direkt von dem Tragelement 10 ausgebildet werden.

Die in Fig. 2 dargestellte Fixiereinrichtung 4 wird gebildet aus zwei gegenüberliegenden, relativ zueinander beweglichen Fixiervorrichtungen 13 und 14, die die Oberfläche 15 der U-förmigen Halterung 5 und die Oberfläche 16 des Tragelementes 10 bereichsweise überdecken, zwei ineinandergreifenden und gegeneinander verdrehbaren Nockenscheiben 82 und 83, einem am Spannelement 24 drehbar bzw. verschwenkbar gelagerten Hebel 84 und dem Spannelement 24 mit einer an der Basis 54 des Tragelementes 10 überstreichenden bzw. überdeckenden Kunststoffscheibe 85 und einer darüberliegenden, parallel angeordneten Blechscheibe 86, die mit dem Spannelement 24 bewegungsfest verbunden ist. Natürlich können die beiden Fixiervorrichtungen 13 und 14 auch zueinander um 90° verdreht angeordnet werden. Vorteilhafterweise wird die der Fixiervorrichtung 13 nähergelegene, bewegungsfest angebrachte Nockenscheibe 82 einstückig an bzw. mit der Fixiervorrichtung 13 angeformt und/ oder verbunden. Gleichermaßen ist dies auch auf die Nockenscheibe 83 übertragbar, die beispielsweise mit dem Hebel 84 drehfest verbunden und/oder einstückig an diesem angeformt ist. Natürlich kann die Nockenscheibe 82 und/oder 83 über alle aus dem Stand der Technik bekannten Verbindungsarten, beispielsweise durch Schweißen, Kleben, Löten etc. mit der Fixiervorrichtung 13 und/oder mit dem Hebel 84 verbunden werden. Die während der Verschwenkung des Hebels 84 relativ zueinander bewegten verdrehbaren Nockenscheiben 82 und 83 bewirken eine Relativverstellung der Fixiervorrichtungen 13 und 14. Derartige, im wesentlichen senkrecht in Umfangsrichtung einen Verstellweg aufweisende Nockenscheiben 82 und 83 sind bereits allgemeiner Stand der Technik. Die Verbindung zwischen der Blechscheibe 86 und dem Spannelement 24 kann reibschlüssig und/oder formschlüssig erfolgen. Natürlich kann auch nur eine, einem scheibenförmigen Bauteil zugeordnete Nockenscheibe 82 oder 83 verwendet werden, wobei die mit dem Hebel 84 drehfest verbundene Nockenscheibe 83 an einer, dem scheibenförmigen Bauteil zugewandten Seitenfläche angreift. Durch eine Dreh- bzw. Verschwenkbewegung des Hebels 84 wird eine Relativbewegung des Bauteiles und der Nockenscheibe 82 oder 83 ausgelöst. Die Höhe der Blechscheibe 86 und der Kunststoffscheibe 85 sind mit einer derartigen Höhe ausgeführt, daß genügend Abstand zu der Basis 32 des Profilstückes 8 gegeben ist.

Das in den Ausführungsvarianten dargestellte Tragelement 10 ist nur eine mögliche Ausführungsvariante und kann natürlich alle möglichen Ausführungsformen annehmen, die eine beliebige Ausführung des ersten Teiles 44 und/oder des weiteren Teiles 45 zulassen. Das Tragelement 10 kann durch einen einteiligen und/oder mehrteiligen in sich geschlossenen oder geöffneten Formkörper gebildet werden. Gleiches gilt natürlich auch für die Ausbildung des Profilstückes 8 und der Halterung 5, die beispielsweise ein Rohr mit einem zu seiner Längserstreckung senkrecht einnehmenden Ebene einen kreisrunden und/oder mehreckigen, geschlossenen oder geöffneten Querschnitt aufweist. Vorteilhaft ist bei dieser Ausführung die kleine und kompakte Bauweise bei gleichzeitig hoher Steifigkeit und einem geringen Gewicht bei exakter Fixierung und Schonung der Konstruktion.

In den Fig. 4 bis 7 ist eine erste Ausführungsvariante der erfindungsgemäßen Fixiervorrichtung 13 und 14, bestehend aus einem einteiligen oder mehrteiligen Bodenelement 87, einem Rückstellelement 88 und einem insbesondere aus Kunststoff hergestellten Führungselement 89 darstellt. Das Bodenelement 87 mit einer im Zentrum liegenden Bohrung 90 besitzt an der Oberfläche 91 an den beiden gegenüberliegenden Seiten 92 und 93 in Richtung einer Längsmittellinie 94 zwei beabstandete und um eine Mittellinie 95 distanzierte und parallel verlaufende Paare von Klemmelemente 96 mit einer Höhe 97 und einer Breite 98.

Die senkrecht zu der Oberfläche 91 angeordneten Klemmelemente 96 weisen eine der Oberfläche 16 des Tragelementes 10 und/oder der Oberfläche 15 der Halterung 5 zugewandte Verzahnung 105 auf, die sich parallel zu der Mittellinie 95 über die Länge der Klemmelemente 96 erstreckt und die Fixierung einer eingestellten Position sicher gewährt.

Die Klemmelemente 96 können natürlich auch beispielsweise eine gekordelte Oberfläche etc. besitzen, oder eine Oberfläche mit einer ausgeprägten rauhen Struktur, die eine gute Sicherheit gegen ein Verrutschen gewährt. Weiters kann die Verzahnung 105 nach allen beliebigen Seiten orientiert sein.

Dahingehend ist jede Kombination der formschlüssigen und/oder reibschlüssigen Fixierung zwischen der Halterung 5 und der Fixiervorrichtung 13 und/oder dem Tragelement 10 und der Fixiervorrichtung 14 möglich. Beispielsweise ist es möglich, an der Oberfläche 15 und/oder 16 der Halterung 5 und/oder des Tragelementes 10 zumindest ein Formelement, insbesondere ein mit einer Verzahnung ausgestatteter Fortsatz, zum formschlüssigen Eingriff der Verzahnung 105 der Klemmelemente 96 mit der Verzahnung des Fortsatzes in der Sperrstellung anzuordnen.

Die sich quer zur Längserstreckung des Bodenelementes 87 und zwischen den Klemmelementen 96 erstreckenden und an den beiden gegenüberliegenden Stirnseiten 107, 108 des Bodenelementes 87 gegengleich und zueinander geneigt verlaufenden Wandteile 139 erstrecken sich in Richtung der Höhe 97 der Klemmelemente 96 und bilden an der Oberfläche 91 eine kleinere Querschnittsfläche aus. An der Unterseite 100 ist eine Ausnehmung 101 für die verdrehgesicherte Aufnahme des Kopfes des Spannelementes 24 angeordnet.

Das dem Rückstellelement 88 übergeordnete Führungselement 89 besitzt eine mit einer Breite 140 und Länge 141 im Zentrum liegende Ausnehmung 142, insbesondere ein Langloch, Schlitz etc., und nimmt ein den Durchmesser 23 des Spannelementes 24 umhüllendes, mit einer Federkonstante ausgebildetes Rückstellelement 88 auf, insbesondere einen O-Ring, eine Gummiwulst, die bei einer Belastung eine allseitige Verformung zulassen. Das Rückstellelement 88 besitzt einen auf den Durchmesser 23 des Spannelementes 24 angepaßten Innendurchmesser 143 und einen die Breite 140 der Ausnehmung 142 überragenden Außendurchmesser 144 und wird von einer in Richtung des Bodenelementes 87 orientierten Unterseite 145 aufgenommen. Das Rückstellelement 88 kann alle möglichen Formen annehmen, beispielsweise rechteckförmig, quadratisch etc., zweckmäßig rund ausgebildet sein.

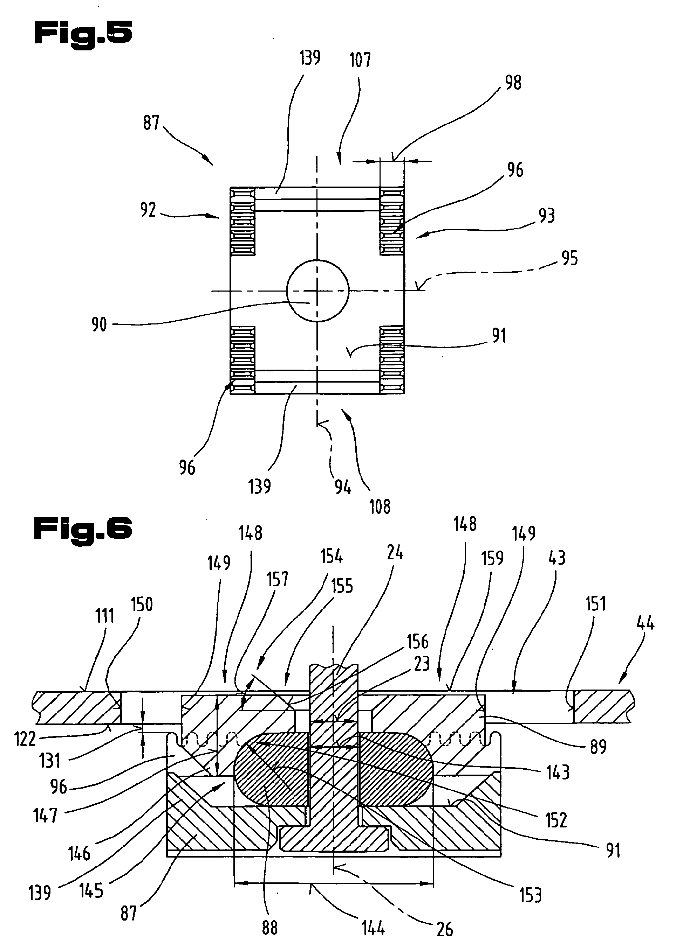

Wie der Fig. 6 besser zu entnehmen, ist das Führungselement 89 an der Unterseite 145 in dessen Längserstreckung mit zwei gegenüberliegenden und in einem dem Außendurchmesser 144 entsprechenden Abstand positionierten Fortsätzen 146 ausgestattet, die den halben Durchmesser des Rückstellelementes 88 überragen. Eine vom Führungselement 89 ausgebildete Gesamthöhe 147 eines Führungs- und Anschlagelementes 148 ragt zumindest in die Ausnehmung 43 des ersten Teiles 44 und bildet mit deren beiden gegenüberliegenden und parallel zu der Mittellinie 26 verlaufenden Seitenflächen Anschlagflächen 149 aus, die den gegenüberliegenden endseitigen Endlagen 150 oder 151 der Ausnehmung 43 wechselweise zugeordnet sind. Der sich zwischen der Mittellinie 26 und der Anschlagflächen 149 ergebende Verlauf der Unterseite 145 resultiert aus einem dem Spannelement 24 zugewendeten, parallel zu der Oberkante 111 verlaufenden Anfangsbereich, der in ein gekrümmtes Kurvenstück 152 übergeht, dessen Radius 153 in etwa dem halben Durchmesser des Rückstellelementes 88 entspricht, gefolgt von einem horizontalen Zwischenbereich, der an einen winkelig verlaufenden Endbereich anschließt. Eine der Unterseite 145 gegenüberliegende Oberseite 154 besitzt um die Mittelachse 26 eine in etwa trapezförmige Öffnung 155 mit in einer dem Bodenelement 87 abgewendeten Richtung größer dimensionierten Querschnittfläche, deren winkelig verlaufenden Schenkel 156 unmittelbar im Bereich der Ausnehmung 142 unter einen Winkel 157 ansteigen und zwei gegenüberliegende, in Richtung der Längsmittellinie 94 verlaufende Führungs- und Anschlagelemente 148 mit einer geringfügig kleiner bemessenen Breite 158 als die Breite 104 der Ausnehmung 43 des ersten Teiles 44 ausbildet. An der großen Querschnittfläche der Öffnung 155 schließt beidseitig eine parallel zu der Oberfläche 91 ausgebildete Oberfläche 159 an. Durch die Relativbewegung des Bodenelementes 87 in Richtung der Basis 54 des Tragelementes 10 und in Richtung der Oberfläche 15 des Schenkels 18 wird das Rückstellelement 88, insbesondere der O-Ring, deformiert und fixiert die eingestellte Lage der Lenkwelle 2 zu der Halterung 5.

Bei einer Verschiebung in Längsrichtung der Lenkwelle 2 gemäß dem Doppelpfeil 11 wird die beim Anschlagen eines Führungs- und Anschlagelementes 148 mit der Anschlagfläche 149 an einer der beiden Endlagen 150 oder 151 die erzeugte kinetische Energie über das Führungselement 89 an das Rückstellelement 88 weitergeleitet und löst eine elastische Verformung aus. Durch die Aufnahme und Absorption der erzeugten Energie an das Rückstellelement 88 sind keine zusätzlichen Dämpfungsorgane am Tragelement 10 nötig. Gleichermaßen können die bei der Verstellung quer zur Längsrichtung der Lenkwelle 2 gemäß dem Doppelpfeil 12 erzeugten Kräfte und die damit verbundene kinetische Energie von dem Rückstellelement 88 aufgenommen werden. Die Anbringung der Ausnehmung 142 erlaubt durch eine Relativbewegung des Rückstellelementes 88 zu dem Bodenelement 87 die Absorption der durch das Anschlagen erzeugten Energie. Durch diese Ausführung wird eine Dämpfung in alle Richtungen bewirkt, die zusätzlich eine geräuschfreie Verstellung, eine Schonung der Konstruktion und gleichzeitig eine geringe Anzahl von Bauteilen bedeutet und in weiterem Sinne eine Reduzierung der Herstellkosten bedeutet.

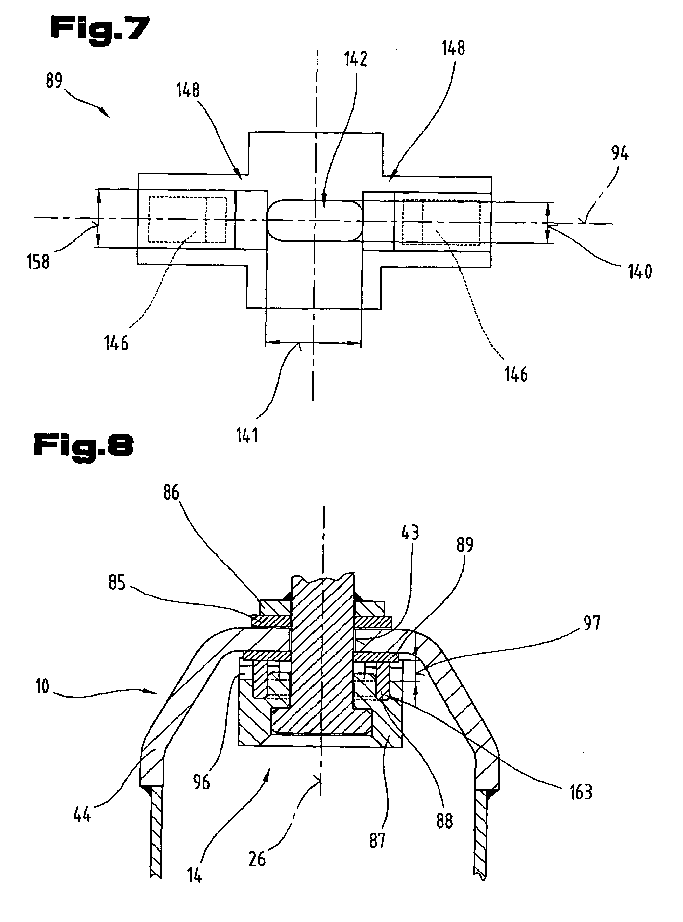

In den Fig. 8 bis 10 ist eine weitere Ausführungsvariante der Fixiervorrichtung 13 und/oder 14 dargestellt. Die Fixiervorrichtungen 13 und/oder 14 bestehen aus einem vorzugsweise rechteckförmig ausgebildeten Bodenelement 87, einem Rückstellelement 88 und einem übergeordneten, in die Ausnehmung 43 des Tragelementes 10 vorragenden Führungselement 89. Natürlich kann das Führungs- und Anschlagelemente 148 ausbildende Führungselement 89 die Oberkante 111 überragen. Das Bodenelement 87 mit einer im Zentrum liegenden Bohrung 90 und einer an der Oberfläche 91 zwischen den Klemmelementen 96 bevorzugt rechteckförmigen Aussparung 161 mit einer Tiefe 162 besitzt an den beiden gegenüberliegenden Seiten 92 und 93 in Richtung der Längsmittellinie 94 zwei beabstandete und um eine Mittellinie 95 distanzierte und parallel verlaufende Paare von Klemmelementen 96 mit der Höhe 97 und der Breite 98.

An eine am Bodenelement 87 mit der Tiefe 162 in Richtung der Ausnehmung 101 angeordnete Nut 163 setzt ein senkrecht zur Oberfläche 91 ausgerichteter und die Oberfläche 91 überragender Aufsatz 164 an, der im Zentrum die Bohrung 90 besitzt und dessen Außenumfang das Rückstellelement 88 adaptiert. Der Querschnitt der Nut 163 bzw. des Aufsatzes 164 wird durch in Richtung der Klemmelemente 96 konvex aufeinander zulaufende Flanken bzw. Kurvenstücke gebildet. Das Führungselement 89 weist in Richtung des Bodenelementes 87 konvex aufweitende Flanken bzw. Seitenflächen auf, sodaß das zwischen dem Bodenelement 87 und dem Führungselement 89 aufgenommene Rückstellelement 88 infolge einer durch das Anschlagen gegen eine der Endlagen 150 oder 151 frei werdenden Schubspannung in dem Rückstellelement 88 eine Deformation erfährt, wobei durch die spezielle Ausbildung des Querschnittes der Nut 163 und des Führungselementes 89 eine Anpassung bzw. ein zumindest bereichsweises Anliegen des Rückstellelement 88 an die Flanken bzw. Kurvenstücke erfolgen kann. Der Vorteil dabei ist, daß das deformierte Rückstellelement 88 über den gesamten Querschnitt gleichmäßig beansprucht wird. Dabei wird durch die auftretende Schubspannung das deformierte Rückstellelement 88 zur bereichsweisen Anlage an den Aufsatz 164 und den in Richtung des Bodenelementes 87 konvex aufweitenden Seitenflächen des Fortsatzes 146 gebracht.

Durch die nutartige Vertiefung im Führungselement 89 und im Bodenelement 87, insbesondere der Nut 163, zur Aufnahme des Rückstellelementes 88 und einer weiteren dieser gegenüberliegend angeordneten Vertiefung in dem Führungselement 89 wird das Rückstellelement 88 zwischen den beiden Bauelementen positioniert gehalten bzw. von diesen fixiert.

Eine weitere mögliche Ausführung der Nut 163 für die Aufnahme des Rückstellelementes 88 besteht darin, daß diese einen rechteckförmigen Querschnitt aufweist.

Das Rückstellelement 88, insbesondere der mit einer definierten Federsteifigkeit ausgebildete Kunststoff wird in Richtung der Mittelachse 26 um den im Zentrum liegenden Aufsatz 164 positioniert gehaltert und schließt in etwa mit der Höhe 97 der Klemmelemente 96 ab. Als Rückstellelemente 88 können alle anderen elastischen Werkstoffe, insbesondere Kunststoffe, die ein derartiges Verhalten bzw. Eigenschaft aufweisen, verwendet werden.

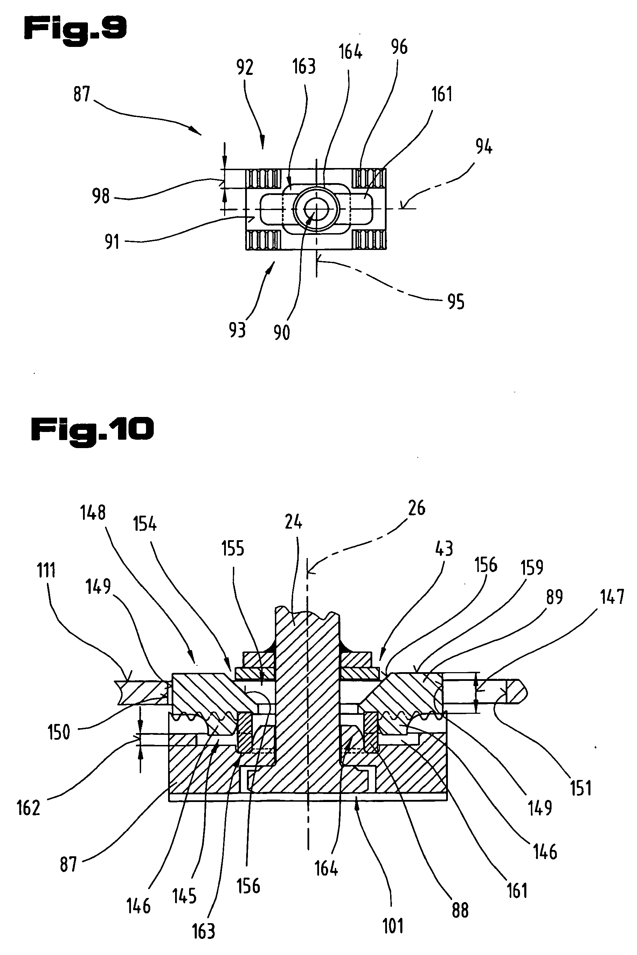

Wie der Fig. 10 besser zu entnehmen, ist das Führungselement 89 an der Unterseite 145 mit zwei beabstandeten gegenüberliegenden Fortsätze 146 ausgestattet, die bevorzugt eine halbe Höhe der Rückstellelemente 88 überragen. Eine vom Führungselement 88 ausgebildete Gesamthöhe 147 ragt in die Ausnehmung 43 des ersten Teiles 44 vor oder überragt diese und stellt mit deren beiden gegenüberliegenden und parallel zu der Mittellinie 26 verlaufenden Führungs- und Anschlagelemente 148 die Anschlagfläche 149 zu den in der Ausnehmung 43 jeweils gegenüberliegenden endseitigen Endlagen 150 oder 151 her. Der sich zwischen der Mittellinie 26 und der Anschlagfläche 149 ergebende Verlauf der Unterseite 145 resultiert aus einem dem Spannelement 24 zugewendeten, parallel zu der Oberkante 111 verlaufenden Anfangsbereich, der in einen senkrecht dazu stehenden Bereich übergeht, gefolgt von einem mit einem Radius übergehenden horizontalen Endbereich. Die Oberseite 154 ist, wie bereits zuvor ausführlich beschrieben mit der in etwa trapezförmigen Öffnung 155 ausgestattet, deren ansteigende Schenkel 156 unter dem Winkel 157 (nicht eingetragen) verlaufen und deren gegenüberliegende, in Richtung der Längsmittellinie 94 verlaufenden Führungs- und/oder Anschlagelemente 109 mit der geringfügig kleiner bemessenen Breite 158 als die Breite 104 der Ausnehmung 43 bilden. An der großen Querschnittfläche der Öffnung 155 schließt beidseitig die parallel zu der Oberfläche 91 ausgebildete Oberfläche 159 an.

Besonders vorteilhaft bei den Ausbildungen nach den Fig. 4 bis 10 ist, daß das Rückstellelement 88 in Längsrichtung des Spannelementes 24 als Spannelement und in quer dazu verlaufender Richtung als Dämpfungselement ausgebildet ist. Werden die Fixiervorrichtungen 13 und/oder 14 in eine Sperrstellung verbracht, wird durch die Relativbewegung zumindest eines Bodenelementes 67 der Fixiervorrichtung 13 oder 14 in Richtung der Oberfläche 15 der Halterung 5 und/oder der Oberfläche 16 des Tragelementes 10 eine Verformung des elastischen Rückstellelement 88 in Längsrichtung des Spannelementes 24 bewirkt und die eingestellte Position der Lenkwelle 2 lösbar fixiert. Daher bildet das Rückstellelement 88 ein Spannelement aus. Gleichermaßen kann das Rückstellelement 88 quer zum Spannelement 24 beim Anschlagen der Fixiervorrichtung 13 oder 14 an eine der Endlagen 150 oder 151 die Kräfte aufnehmen, sodaß es ein Dämpfungselement quer zur Längsrichtung des Spannelementes 24 und/oder gegebenenfalls in Längsrichtung des Spannelementes 24 ausbildet.

### Funktionsweise der Verstell- und Fixiereinrichtung:

Ist eine Position zu fixieren, so wird durch die Betätigung des Hebels 84 eine Verstellung der relativ zueinander beweglichen Klemmelemente 96 der Fixiervorrichtungen 13 und/oder 14 in Längserstreckung des Spannelementes 24 ausgelöst und legt einen durch den Abstand zwischen einer Unterkante 122 und den Klemmelementen 96 definierten Hub 131 zurück. Dadurch werden die Fixiervorrichtungen 13 und/oder 14 mit den Klemmelementen 96 von einer entspannten Öffnungsstellung in eine fixierende Sperrstellung verbracht und fixieren die eingestellte Position bzw. Lage der Lenkwelle 2. In der fixierenden Sperrstellung sind das Tragelement 10 und das Profilstück 8 zur Halterung 5 positioniert gehalten und/oder zumindest geringfügig verspannt. Dabei stützen sich die einander zugewandten Seitenflächen des Schenkels 18 der Halterung 5 und die Seitenflächen der Basis 32 des Profilstückes 8 zumindest teilweise gegeneinander ab und bewirken daher zwischen dem Schenkel 18 der Halterung 5 und der Basis 32 des Profilstückes 8 einen von der Oberflächenbeschaffenheit derselben abhängigen Reibschluß. Zumindest einer der Oberflächen kann eine größere Oberflächenrauhigkeit aufweisen, die den Reibschluß in vorteilhafter Weise verbessern kann, wodurch die Bauelemente wie Rückstellelemente 88, Bodenelemente 87 etc. der Fixiervorrichtungen 13 und 14 in deren konstruktiven Auslegung kleiner bemessen werden können.

Die vom Rückstellelement 88 erzeugte Vorspannkraft bewirkt im gelösten Zustand einen minimalen Verstellwiderstand, sodaß der Bediener ohne Aufbringung einer Gegenkraft die eingestellte Bedienungshöhe fixieren kann.

Die Rückstellelemente 88 der Fixiervorrichtungen 13 und/oder 14 können eine gleiche oder unterschiedliche Federsteifigkeit aufweisen, wonach das Fixieren nach der Betätigung des Hebels 84 von einer entspannten Öffnungsstellung in eine fixierende Sperrstellung gleichzeitig oder wechselweise aufeinanderfolgend vonstatten geht.

Dadurch werden in einer entspannten Öffnungsstellung die Führungselemente 89 der Fixiervorrichtungen 13 und/oder 14 über die Rückstellelemente 88 spielfrei an der diesen zugewandten Oberflächen 15 und/oder 16 der Halterung 5 und/oder des Tragelementes 10 geführt bzw. gleitend angelegt, wobei gleichermaßen die Klemmelemente 96 der Fixiervorrichtungen 13 und/oder 14 distanziert zu den diesen zugewandten Oberflächen 15 und/oder 16 verlaufen.

In der Sperrstellung werden die Klemmelemente 96 mit einer über die Federsteifigkeit der Rückstellelemente 88 voreinstellbaren Anpreßkraft gegen die Oberfläche 15 der Halterung 5 und/oder die Oberfläche 16 des Tragelementes 10 angepreßt.

Die in den vorangegangen Fig. beschriebene Verstell- und Fixiereinrichtung 3 und 4 kann genausogut an einer automatisch verstellbaren Lenkwellenverstelleinheit 1 verwendet werden, bei welcher die Verstelleinrichtung 3 und die Fixiereinrichtung 4 über elektrische Antriebsanordnungen betätigbar sind und die Verstelleinrichtung 3 eine selbsttätige Verstellung bzw. Anpassung an eine von dem Bediener vorgebbare, abgespeicherte und aufrufbare Einstellung der Lenkwelle 2 durchführbar ist und diese eingestellte Position selbsttätig von der Fixiereinrichtung 4 fixiert bzw. gehalten wird.

Der Ordnung halber sei abschließend darauf hingewiesen, daß zum besseren Verständnis des Aufbaus der Verstell- und Fixiereinrichtung diese bzw. deren Bestandteile teilweise unmaßstäblich und/oder vergrößert und/oder verkleinert dargestellt wurden.

### Bezugszeichenaufstellung

- 1: Lenkwellenverstelleinheit
- 2: Lenkwelle
- 3: Verstelleinrichtung
- 4: Fixiereinrichtung
- 5: Halterung

- 6: Karosserie
- 7: Schwenkachse
- 8: Profilstück
- 9: Führungselement
- 10: Tragelement

- 11: Doppelpfeil
- 12: Doppelpfeil
- 13: Fixiervorrichtung
- 14: Fixiervorrichtung
- 15: Oberfläche

- 16: Oberfläche
- 17: Mittellinie
- 18: Schenkel
- 19: Höhe
- 20: Länge

- 21: Breite
- 22: Durchbruch
- 23: Durchmesser
- 24: Spannelement
- 25: Verstellweg

- 26: Mittellinie
- 27: Symmetrieachse
- 28: Abstand
- 29: Höhe
- 30: Seitenschenkel

- 31: Außenseite
- 32: Basis
- 33: Innenseite
- 34: Winkel
- 35: Endteil

- 36: Zwischenteil
- 37: Führungsvorrichtung
- 38: Stütz- und/oder Führungsfläche
- 39: Öffnungsweite
- 40: Bohrung

- 41: Durchmesser
- 42: Lenkwellenmittellinie
- 43: Ausnehmung
- 44: Teil
- 45: Teil

- 46: Höhe
- 47: Höhe
- 48: Stirnfläche
- 49: Stirnfläche
- 50: Teilungsebene

- 51: Wandstärke
- 52: Wandstärke
- 53: Querschnitt
- 54: Basis
- 55: Breitenmaß

- 56: Breitenmaß
- 57: Seitenschenkel
- 58: Winkel
- 59: Zwischenteil
- 60: Endteil

- 61: Basis
- 62: Seitenschenkel
- 63: Anfangsteil
- 64: Zwischenteil
- 65: Endteil

- 66: Außenseite
- 67: Innenseite
- 68: Hohlkehle
- 69: Stirnfläche
- 70: Stirnfläche

- 71: Stütz- und Führungsfläche
- 72: Höhe
- 73: Symmetrieachse
- 74: Winkel
- 75: Länge

- 76: Stirnfläche
- 77: Stirnfläche
- 78: Lageraufnahmestelle
- 79: Lageraufnahmestelle
- 80: Lagerung

- 81: Lagerung
- 82: Nockenscheibe
- 83: Nockenscheibe
- 84: Hebel
- 85: Kunststoffscheibe

- 86: Blechscheibe
- 87: Bodenelement
- 88: Rückstellelement
- 89: Führungselement
- 90: Bohrung

- 91: Oberfläche
- 92: Seite
- 93: Seite
- 94: Längsmittellinie
- 95: Mittellinie

- 96: Klemmelement
- 97: Höhe
- 98: Breite
- 100: Unterseite

- 101: Ausnehmung
- 104: Breite
- 105: Verzahnung

- 111: Oberkante

- 139: Wandteil
- 140: Breite

- 141: Länge
- 142: Ausnehmung
- 143: Innendurchmesser
- 144: Außendurchmesser
- 145: Unterseite

- 146: Fortsatz
- 147: Gesamthöhe
- 148: Führungs- und Anschlagelement
- 149: Anschlagfläche
- 150: Endlage

- 151: Endlage
- 152: Kurvenstück
- 153: Radius
- 154: Oberseite
- 155: Öffnung

- 156: Schenkel
- 157: Winkel
- 158: Breite
- 159: Oberfläche

- 161: Aussparung
- 162: Tiefe
- 163: Nut
- 164: Aufsatz

## Patentansprüche

1. Fixiervorrichtung (13, 14) für eine Lenkwellenverstelleinheit (1) mit einem Tragelement (10) und einer ortsfest angeordneten Halterung (5), bei der das Tragelement (10) eine Lenkwelle (2) lagert, und die Lenkwelle (2) in Richtung ihrer Längsachse verschiebbar und/oder in einer dazu radialen Richtung verschwenkbar angeordnet ist, welche Fixiervorrichtung (13, 14) zumindest ein, auf einem quer zur Lenkwelle (2) ausgerichteten Spannelement (24) in Richtung seiner Längserstreckung verstellbares Bodenelement (87) mit wenigstens einem Klemmelement (96), zumindest ein Führungselement (89) und zumindest ein zwischen dem Bodenelement (87) und dem Führungselement (89) angeordnetes, elastisch verformbares Rückstellelement (88) aufweist, und das Tragelement (10) mit einer in Richtung der Längsachse der Lenkwelle (2) verlaufenden, schlitzartigen Ausnehmung (43) und/oder die Halterung (5) mit einem quer zur Längsachse der Lenkwelle (2) verlaufenden, schlitzartigen Durchbruch (22) versehen ist, **dadurch gekennzeichnet, daß** das Führungselement (89) zumindest ein Führungs- und Anschlagelement (148) ausbildet, welches in die Ausnehmung (43) im Tragelement (10) oder den Durchbruch (22) der Halterung (5) vorragt und zwischen zwei voneinander distanzierten Endlagen (150, 151) der Ausnehmung (43) oder des Durchbruches (22) verstellbar geführt ist und das Rückstellelement (88) in einer quer zur Längsrichtung des Spannelementes (24) verlaufenden Richtung als Dämpfungselement elastisch verformbar ausgebildet ist.

2. Fixiervorrichtung nach Anspruch 1, **dadurch gekennzeichnet, daß** das Rückstellelement (88) in Längsrichtung des Spannelementes (24) als Dämpfungselement ausgebildet ist.

3. Fixiervorrichtung nach Anspruch 1, **dadurch gekennzeichnet, daß** das Führungselement (89) zumindest ein Führungs- und Anschlagelement (148) und eine Ausnehmung (142) umfaßt, die eine in Verstellrichtung des Führungselementes (89) verlaufende Längserstreckung aufweist und durch die das Spannelement (24) hindurchragt.

4. Fixiervorrichtung nach Anspruch 1, **dadurch gekennzeichnet, daß** das Bodenelement (87) an einer dem Führungselement (89) zugewandten Oberfläche (91) wenigstens eine vertieft angeordnete Aussparung (161) umfaßt, die eine in Verstellrichtung des Führungselementes (89) verlaufende Längserstreckung aufweist.

5. Fixiervorrichtung nach Anspruch 4, **dadurch gekennzeichnet, daß** das Bodenelement (87) mit einer die Breite der Aussparung (161) quer zur Längserstreckung des Bodenelementes (87) beidseitig überragenden Nut (163) zur Aufnahme des Rückstellelementes (88) ausgestattet ist.

6. Fixiervorrichtung nach einem der Ansprüche 1 bis 5, **dadurch gekennzeichnet, daß** das Bodenelement (87) eine Bohrung (90), durch die das Spannelement (24) hindurchragt, und einen an diese angrenzenden, radial umlaufenden Aufsatz (164) aufweist, der die Oberfläche (91) überragt.

7. Fixiervorrichtung nach Anspruch 6, **dadurch gekennzeichnet, daß** das Rückstellelement (88) von dem Aufsatz (164) positioniert gehaltert ist.

8. Fixiervorrichtung nach einem der Ansprüche 1 bis 7, **dadurch gekennzeichnet, daß** das Führungselement (89) auf einer dem Bodenelement (87) benachbarten Unterseite (145) Fortsätze (146) mit einem dem Spannelement (24) zugewandten, konkaven Kurvenstück und das diesem gegenüberliegend angeordnete Bodenelement (87), insbesondere der Aufsatz (164) auf einer dem Führungselement (89) zugewandten Seite, ein dem Spannelement (24) zugewandt konvexes Kurvenstück aufweist, zwischen denen das Rückstellelement (88) positioniert gehalten ist.

9. Fixiervorrichtung nach einem der Ansprüche 1 bis 8, **dadurch gekennzeichnet, daß** das Rückstellelement (88) aus einem elastischen Kunststoffteil ausgebildet ist.

10. Fixiervorrichtung nach einem der Ansprüche 1 bis 9, **dadurch gekennzeichnet, daß** das Rückstellelement (88) durch einen elastischen O-Ring gebildet ist.

## Claims

1. Fixing apparatus (13, 14) for a steering shaft adjustment unit (1) having a support element (10) and a mounting (5) which is disposed in a positionally fixed manner and in which the support element (10) supports a steering shaft (2), and the steering shaft (2) is disposed in such a manner as to be displaceable in the direction of its longitudinal axis and/or pivotable in a direction radial thereto, which fixing apparatus (13, 14) comprises at least one base element (87) which can be adjusted in the direction of its longitudinal extension on a tensioning element (24) aligned transversely with respect to the steering shaft (2) and has at least one clamping element (96), at least one guide element (89) and at least one elastically deformable restoring element (88) which is disposed between the base element (87) and the guide element (89), and the support element (10) is provided with a slot-like cut-out (43) which extends in the direction of the longitudinal axis of the steering shaft (2) and/or the mounting (5) is provided with a slot-like opening (22) which extends transversely with respect to the longitudinal axis of the steering shaft (2), **characterised in that** the guide element (89) forms at least one guide and stop element (148) which protrudes into the cut-out (43) in the support element (10) or into the opening (22) of the mounting (5) and is guided so as to be adjustable between two mutually spaced apart end positions (150, 151) of the cut-out (43) or of the opening (22), and the restoring element (88) is formed as a damping element in an elastically deformable manner in a direction extending transversely with respect to the longitudinal direction of the tensioning element (24).

2. Fixing apparatus as claimed in claim 1, **characterised in that** the restoring element (88) is formed as a damping element in the longitudinal direction of the tensioning element (24).

3. Fixing apparatus as claimed in claim 1, **characterised in that** the guide element (89) comprises at least one guide and stop element (148) and a cut-out (142) which comprises a longitudinal extension extending in the adjustment direction of the guide element (89) and through which the tensioning element (24) protrudes.

4. Fixing apparatus as claimed in claim 1, **characterised in that** on a surface (91) facing towards the guide element (89) the base element (87) comprises at least one recessed cavity (161) which comprises a longitudinal extension extending in the adjustment direction of the guide element (89).

5. Fixing apparatus as claimed in claim 4, **characterised in that** the base element (87) is equipped with a groove (163), which protrudes on both sides over the width of the cavity (161) in a transverse manner with respect to the longitudinal extension of the base element (87), for the purpose of receiving the restoring element (88).

6. Fixing apparatus as claimed in any one of claims 1 to 5, **characterised in that** the base element (87) comprises a bore (90), through which the tensioning element (24) protrudes, and a radially circumferential attachment (164) which adjoins the bore and protrudes over the surface (91).

7. Fixing apparatus as claimed in claim 6, **characterised in that** the restoring element (88) is held in position by the attachment (164).

8. Fixing apparatus as claimed in any one of claims 1 to 7, **characterised in that** on an underside (145) adjacent to the base element (87) the guide element (89) comprises extensions (146) having a concave cam segment, facing towards the tensioning element (24), and the base element (87) which is disposed opposite thereto, in particular the attachment (164) comprises on a side facing towards the guide element (89) a convex cam segment facing towards the tensioning element (24), between which cam segments the restoring element (88) is held in position.

9. Fixing apparatus as claimed in any one of claims 1 to 8, **characterised in that** the restoring element (88) is formed from an elastic synthetic material part.

10. Fixing apparatus as claimed in any one of claims 1 to 9, **characterised in that** the restoring element (88) is formed by means of an elastic O-ring.

## Revendications

1. Système de fixation (13, 14) pour un ensemble de colonne de direction réglable en positionnement (1), avec un élément de support (10) et un dispositif de maintien (5), installé fixement, système dans lequel l'élément de support (10) sert de logement à une colonne de direction (2) et ladite colonne de direction (2) est montée de manière à pouvoir être déplacée dans la direction de son axe longitudinal et / ou pivotée dans une direction radiale par rapport à celui-ci, ledit système de fixation (13, 14) présentant au moins un élément de fond (87) déplaçable dans la direction de sa dimension longitudinale, sur un élément de serrage (24), orienté transversalement par rapport à l'arbre de direction (2), avec au moins un élément de blocage (96), au moins un élément de guidage (89) et au moins un élément de rappel (88) élastiquement déformable, disposé entre l'élément de fond (87) et l'élément de guidage (89), et l'élément de support (10) étant pourvu d'un évidement (43) en forme de fente, qui s'étend dans la direction de l'axe longitudinal de la colonne de direction (2) et / ou le dispositif de maintien (5) étant pourvu d'un passage (22) en forme de fente, qui s'étend transversalement par rapport à l'arbre de direction (2), **caractérisé en ce que** l'élément de guidage (89) forme au moins un élément de guidage et de butée (148), qui fait saillie dans l'évidement (43) de l'élément de support (10) ou dans le passage (22) du dispositif de maintien (5), et qui est guidé, déplaçable entre deux positions finales (150, 151) de l'évidement (43) ou du passage (22), distancées l'une de l'autre, et que l'élément de rappel (88) peut être déformé élastiquement, en tant qu'élément amortisseur, dans une direction perpendiculaire à la direction longitudinale de l'élément de serrage (24).

2. Système de fixation selon la revendication 1, **caractérisé en ce que** l'élément de rappel (88) est réalisé en tant qu'élément amortisseur dans la direction longitudinale de l'élément de serrage (24).

3. Système de fixation selon la revendication 1, **caractérisé en ce que** l'élément de guidage (89) comprend au moins un élément de guidage et de butée (148) et un évidement (142), qui présente une dimension longitudinale, qui s'étend dans la direction de déplacement de l'élément de guidage (89) et fait saillie à travers l'élément de serrage (24).

4. Système de fixation selon la revendication 1, **caractérisé en ce que** l'élément de fond (87) comprend, sur une surface (91) orientée vers l'élément de guidage (89), au moins un évidement (161) disposé en profondeur, qui présente une dimension longitudinale, qui s'étend dans la direction de déplacement de l'élément de guidage (89).

5. Système de fixation selon la revendication 4, **caractérisé en ce que** l'élément de fond (87) est équipé, pour la réception de l'élément de rappel (88), d'une rainure (163), qui surpasse, des deux côtés, la largeur de l'évidement (161), perpendiculairement à la dimension longitudinale de l'élément de fond (87).

6. Système de fixation selon l'une des revendications 1 à 5, **caractérisé en ce que** l'élément de fond (87) présente un alésage (90), à travers lequel l'élément de serrage (24) fait saillie, et une garniture, qui, l'entourant radialement en lui étant contigüe, ressort de la surface (91).

7. Système de fixation selon la revendication 6, **caractérisé en ce que** l'élément de rappel (88) est maintenu positionné par la garniture (164).

8. Système de fixation selon l'une des revendications 1 à 7, **caractérisé en ce que** l'élément de guidage (89) présente, sur une face inférieure (145), voisine de l'élément de fond (87), des prolongements (146) avec une portion courbe, concave, orientée vers l'élément de serrage (24), et l'élément de fond (87), opposé à celui-ci, en particulier la garniture (164), présente, sur une face orientée vers l'élément de guidage (89), une portion courbe, convexe, orientée vers l'élément de serrage (24), l'élément de rappel (88) étant maintenu positionné entre elles.

9. Système de fixation selon l'une des revendications 1 à 8, **caractérisé en ce que** l'élément de rappel (88) est formé par une pièce élastique en matière plastique.

10. Système de fixation selon l'une des revendications 1 à 9, **caractérisé en ce que** l'élément de rappel (88) est formé par un anneau torique élastique.
